# FASCICULE DE BREVET EUROPEEN

(11) **EP 1 045 971 B1**
(45) Date de publication et mention de la délivrance du brevet: **07.04.2004**
(21) Numéro de dépôt: 99954068.5
(22) Date de dépôt: 05.11.1999
(51) Int. Cl.: F02K 1/82, F23R 3/00

(54) **ECHANGEUR DE CHALEUR EN MATERIAU COMPOSITE ET PROCEDE POUR SA FABRICATION**
WÄRMETAUSCHER AUS VERBUNDWERKSTOFF UND DESSEN HERSTELLUNGSVERFAHREN
HEAT EXCHANGER IN COMPOSITE MATERIAL AND METHOD FOR MAKING SAME

(30) Priorité: 05.11.1998 FR 9813923
(43) Date de publication de la demande: 25.10.2000
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: VIDAL, Jean-Pierre, 33160 St. Aubin de Médoc (FR); LARRIEU, Jean-Michel, 33460 Macau (FR); CIAIS, Jean-Pierre, 33290 Blanquefort (FR)
(74) Mandataire: Joly, Jean-Jacques
(86) Numéro de dépôt international: PCT/FR1999/002708
(87) Numéro de publication internationale: WO 2000/028202

(56) Documents cités:
- EP-A- 0 314 261
- GB-A- 2 279 734
- US-A- 4 488 920
- US-A- 4 838 031
- US-A- 5 174 368
- US-A- 5 352 529
- US-A- 5 583 895

## Description

### Domaine de l'invention

L'invention concerne les échangeurs de chaleur qui utilisent des ensembles d'échanges thermiques basés sur une circulation de fluide, et qui sont destinés à être employés dans un environnement thermiquement sévère.

Des domaines particuliers, mais non limitatifs, d'application de l'invention sont les systèmes de transformation de la matière, par exemple les réacteurs de fusion nucléaire, et les systèmes de propulsion, en particulier les éléments de paroi de chambre de combustion de réacteurs, notamment de statoréacteurs.

### Arrière-plan de l'invention

Les échangeurs de chaleur utilisés dans ces applications sont généralement métalliques, au moins en partie. Or, les propriétés thermiques et mécaniques des métaux et alliages métalliques limitent leur champ d'utilisation, ainsi que les performances et la sécurité. De plus, les échangeurs de chaleur métalliques sont lourds et encombrants, ce qui pénalise leur utilisation au moins dans certaines applications.

L'utilisation de matériaux composites réfractaires seuls ou en combinaison avec des métaux, a été envisagée pour réaliser des échangeurs de chaleur destinés à être utilisés dans un environnement thermique sévère, notamment pour paroi de réacteur de fusion nucléaire. Ainsi, la demande de brevet WO 98/03 297 décrit la réalisation d'un tel échangeur par brasage de pièces en matériau composite carbone/carbone (C/C) sur un substrat métallique (cuivre) refroidi par circulation de fluide. On retrouve ici l'utilisation du métal. On connaît aussi le brevet US 5 583 895 qui, pour une même application, décrit une structure d'échangeur sous forme d'un bloc de matériau composite C/C dans lequel sont formés des passages de circulation de fluide. Les parois des passages sont rendues étanches par une garniture métallique, par exemple en cuivre, brasée sur le matériau composite C/C.
Voir aussi le document US-A-5 174 368.

### Objet et résumé de l'invention

L'invention a pour objet de fournir un échangeur de chaleur capable d'être utilisé dans un environnement thermique sévère.

L'invention a aussi pour objet de fournir un échangeur de chaleur dans lequel la réalisation des différentes fonctions thermiques et structurelles peut être optimisée pour réduire autant que possible la masse, l'encombrement et le coût.

L'invention a aussi pour objet de fournir un échangeur de chaleur susceptible d'être réalisé aisément.

L'invention a encore pour objet un procédé de fabrication d'un tel échangeur de chaleur.

Un échangeur de chaleur conforme à l'invention est caractérisé en ce qu'il comprend une partie intermédiaire en matériau composite réfractaire dans laquelle sont formés des canaux de circulation de fluide, la partie intermédiaire étant intercalée entre une partie en matériau composite réfractaire formant écran thermique et une partie en matériau composite thermostructural formant structure de maintien de l'échangeur, les parties constitutives de l'échangeur de chaleur étant assemblées par brasage.

Un matériau composite thermostructural est un matériau composite qui présente des propriétés mécaniques le rendant apte à constituer des éléments de structure et qui conserve ces propriétés jusqu'à des températures élevées. Des matériaux composites thermostructuraux sont typiquement des matériaux composites ayant un renfort fibreux en fibres réfractaires, telles que des fibres en carbone ou céramique, densifié par une matrice réfractaire, telle une matrice en carbone ou céramique. Des exemples de matériaux composites thermostructuraux sont les matériaux composites carbone/carbone (C/C) à fibres de renfort et matrice en carbone, et les matériaux composites à matrice céramique (CMC), par exemple à matrice en carbure de silicium (SiC).

Avantageusement, le matériau composite thermostructural formant la structure de maintien de l'échangeur est un matériau composite C/C. Il peut être sous forme d'un nid d'abeilles ou d'un matériau composite dans lequel le renfort fibreux est formé de couches fibreuses superposées liées entre elles par des fibres s'étendant transversalement par rapport aux couches, comme cela peut être obtenu par aiguilletage, tel que décrit par exemple dans le brevet US 4 790 052.

Avantageusement encore, le matériau de la partie intermédiaire est également un matériau composite C/C qui est alors utilisé plus pour ses qualités réfractaires que structurales.

Il est envisageable de réaliser la partie formant structure de maintien et la partie intermédiaire dans un même bloc de matériau composite C/C auquel la partie formant écran thermique est brasée.

Avantageusement encore, le matériau de la partie formant écran thermique est un matériau de type CMC, par exemple un matériau composite C/SiC ou SiC/SiC (renfort en fibres de carbone ou de carbure de silicium densifié par une matrice de carbure de silicium), plus aptes que les matériaux composites C/C à être exposés à un flux thermique intense notamment en atmosphère oxydante. Un avantage de l'échangeur de chaleur selon l'invention réside dans la possibilité de sélectionner les matériaux les plus adaptés pour assurer les fonctions thermiques et mécaniques de l'échangeur, donc d'optimiser la réalisation de celui-ci en termes de performances et d'encombrement.

Selon encore une autre particularité de l'échangeur de chaleur conforme à l'invention, les canaux de circulation de fluide sont formés, par exemple par usinage, dans une face de la pièce intermédiaire et sont délimités en partie par la paroi adjacente d'une des deux autres parties. La réalisation des canaux de circulation de fluide est donc particulièrement simple.

Si nécessaire, l'étanchéité des canaux peut être assurée par formation d'un revêtement sur leur paroi, par exemple un revêtement métallique en couche mince. Un tel revêtement pourra être formé sur la totalité des faces en regard des parties à assembler afin de faciliter le brasage en constituant aussi une couche d'accrochage pour la brasure.

### Brève description des dessins

Il sera ci-après fait référence aux dessins annexés sur lesquels
- la figure 1 illustre en coupe un élément d'échangeur de chaleur selon un premier mode de réalisation de l'invention ;
- la figure 2 montre les étapes d'un procédé de réalisation de l'élément d'échangeur de chaleur de la figure 1 ;
- la figure 3 illustre de façon éclatée un élément de chambre de combustion de réacteur formant échangeur de chaleur selon un deuxième mode de réalisation de l'invention ; et
- la figure 4 illustre très schématiquement une chambre de statoréacteur avec une vue de détail d'un élément de paroi de la chambre de combustion formant échangeur de chaleur selon un troisième mode de réalisation de l'invention.

### Description détaillée de modes de réalisation préférés

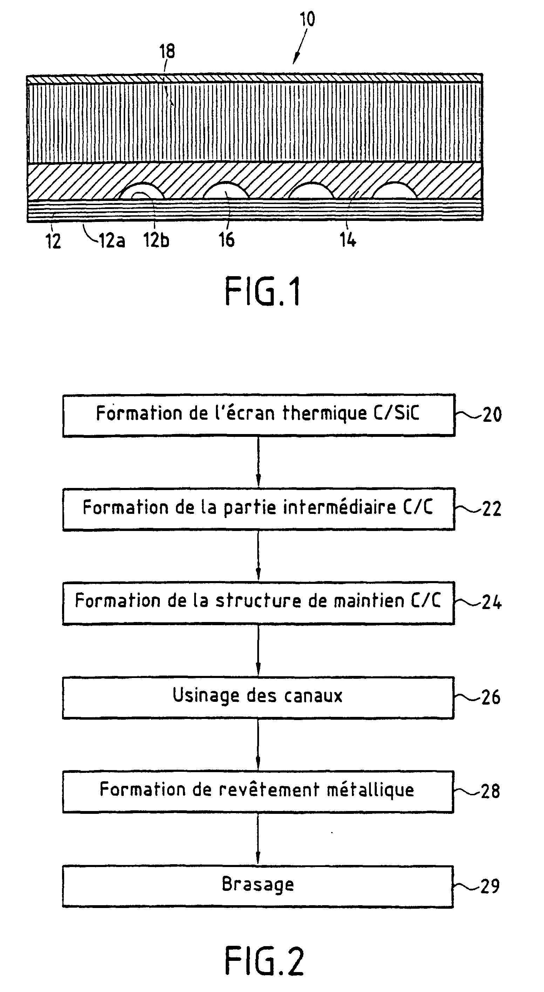

La figure 1 est une vue en coupe d'un bloc unitaire 10 constituant un élément d'échangeur de chaleur. Le bloc 10 peut constituer un élément de paroi d'une enceinte où règnent des conditions thermiques sévères, par exemple un élément de paroi d'une chambre de confinement de plasma dans un réacteur de fusion nucléaire.

Le bloc échangeur de chaleur 10 comprend un écran thermique 12 dont la face externe 12a est destinée à être exposée à un flux thermique, une partie intermédiaire 14 présentant des canaux 16 de circulation de fluide et une structure de maintien 18. La partie intermédiaire est intercalée entre l'écran thermique 12 et la structure de maintien 18 et est liée à ces derniers par brasage. Les canaux de circulation de fluide 16 sont usinés dans la face de la partie intermédiaire située du côté de l'écran thermique 12 et recouverte par la face interne 12b de l'écran thermique, laquelle face interne 12b délimite ainsi partiellement les canaux 16. Les canaux 16 sont destinés à être reliés à un circuit de circulation d'un fluide caloporteur.

L'écran thermique 12, exposé aux conditions thermiques les plus sévères, est en un matériau composite réfractaire, de préférence un matériau composite à matrice céramique (CMC), par exemple un matériau composite de type C/SiC, à renfort fibreux en fibres de carbone densifié par une matrice de carbure de silicium.

La partie intermédiaire est également un matériau composite réfractaire, par exemple un matériau composite C/C à renfort fibreux en fibres de carbone densifié par une matrice en carbone.

La structure de maintien est en un matériau composite thermostructural et est réalisée pour assurer la fonction structurale du bloc 10. On utilisera par exemple une structure de maintien sous forme de structure en nid d'abeilles en matériau composite C/C. Un procédé de fabrication d'une telle structure est décrit dans le brevet US 5 415 715. On pourra aussi utiliser une structure de maintien sous forme d'un matériau composite C/C dans lequel le renfort fibreux est formé de couches planes de texture fibreuse liées entre elles par des fibres s'étendant transversalement par rapport aux couches. Les couches sont par exemple des couches de tissu, des nappes unidirectionnelles superposées avec des directions différentes, des couches de feutre..., et elles sont de préférence liées entre elles par aiguilletage. Un procédé de fabrication d'un tel matériau composite C/C est décrit dans le brevet US 4 790 052.

La figure 2 indique les étapes d'un procédé de fabrication du bloc 10 d'échangeur de chaleur.

L'écran thermique en matériau CMC, par exemple en matériau composite C/SiC, la partie intermédiaire en matériau composite C/C et la structure de maintien en matériau composite C/C sont réalisés séparément (étapes 20, 22, 24). Les procédés de fabrication de pièces en matériau composite de type C/C ou C/SiC par élaboration d'un renfort fibreux, ou préforme, et densification du renfort fibreux par une matrice sont bien connus. La densification peut être réalisée par infiltration chimique en phase vapeur, ou par imprégnation par un précurseur de la matrice à l'état liquide et transformation du précurseur par traitement thermique.

Les canaux 16 sont usinés dans une face de la partie intermédiaire 14 (étape 26).

Ensuite, un revêtement métallique peut être formé sur l'intégralité des faces en regard de la partie intermédiaire, de l'écran thermique et de la structure de maintien (étape 28). Le revêtement métallique est choisi pour améliorer la mouillabilité vis-à-vis de la brasure utilisée ensuite pour l'assemblage des différentes parties et donc favoriser l'accrochage de la brasure. Le revêtement métallique assure en outre l'étanchéité des parois des canaux de circulation de fluide. En effet, les matériaux composites C/C ou des matériaux CMC obtenus comme indiqué ci-avant présentent inévitablement une porosité résiduelle qu'il convient d'obturer en surface pour assurer l'étanchéité des canaux.

Le revêtement métallique, par exemple en titane, chrome, zirconium, hafnium ou béryllium peut être déposé par dépôt chimique en phase vapeur ou par projection sous vide.

Dans le cas où un revêtement métallique d'accrochage de la brasure n'est pas nécessaire, il convient néanmoins d'assurer l'étanchéité des parois des canaux 16. Cette étanchéité est alors assurée par dépôt d'une couche d'étanchéité, au moins sur les portions usinées de la partie intermédiaire et sur les portions de la face adjacente de l'écran thermique situées en regard. La couche d'étanchéité est déposée par dépôt chimique en phase vapeur. Elle est métallique ou non métallique, par exemple en carbone ou céramique.

Le brasage (étape 29) est réalisé en déposant une couche de brasure sur les faces à assembler de la partie intermédiaire de l'écran thermique et de la structure de maintien et en portant l'ensemble, maintenu dans un outillage, à la température de brasage voulue compte tenu de la brasure utilisée. La brasure utilisée est choisie parmi celles connues pour le brasage de céramiques ou composites réfractaires entre eux ou sur des métaux, par exemple les brasures commercialisées sous les dénominations "TiCuSil" ou "Cu-ABA" par la société des Etats-Unis d'Amérique Wesgo, Inc. On pourra se référer à la demande de brevet WO 98/03 297 déjà citée, ainsi qu'à un article de A.G. Foley et D.J. Andrews "Active metal brazing for joining ceramics to metals" GEC ALSTHOM TECHNICAL REVIEW, n° 13, février 1994, France, p. 49-64.

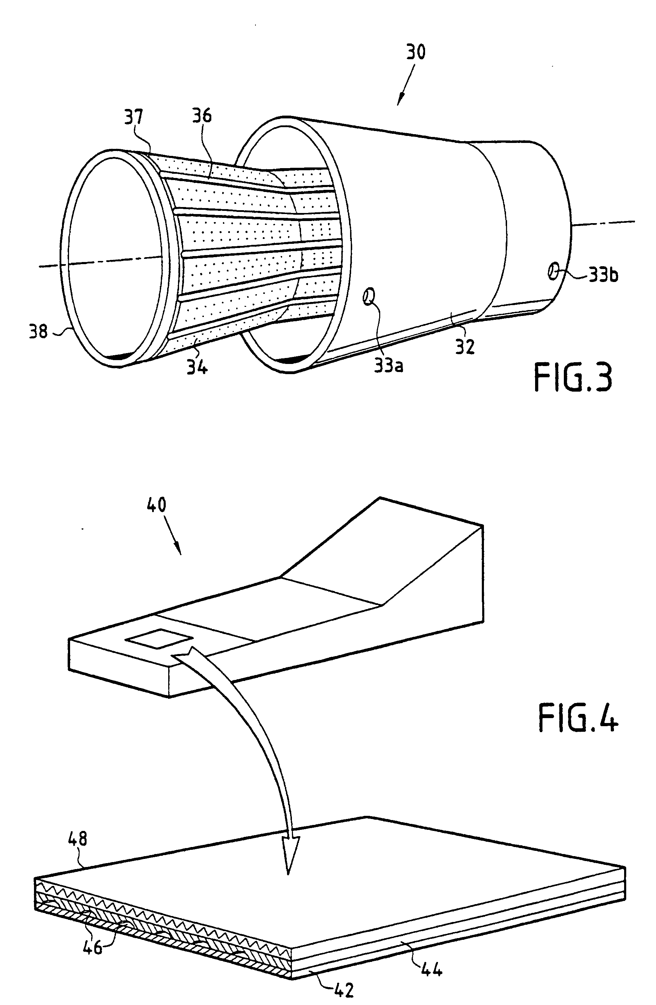

La figure 3 illustre de façon éclatée un autre mode de réalisation d'un échangeur de chaleur selon l'invention constituant un élément 30 de chambre de combustion de réacteur. L'écran thermique 32 est une pièce annulaire axisymétrique comportant une partie avant cylindrique prolongée vers l'arrière par une partie tronconique. L'écran thermique 32 est réalisé en une seule pièce de matériau composite CMC, par exemple en matériau composite C/SiC. Le renfort fibreux du matériau composite est réalisé par enroulement d'une texture fibreuse sur un mandrin de forme adaptée, et la préforme obtenue est densifiée par la matrice du matériau composite.

Les canaux 36 de circulation de fluide sont formés en direction axiale par usinage de la face d'une partie intermédiaire 34 située en regard de l'écran thermique 32. La partie intermédiaire 34 est en matériau composite C/C. Le fluide caloporteur est un combustible qui est réchauffé par passage dans l'échangeur de chaleur avant d'être injecté dans la chambre de combustion. Des orifices d'admission et de sortie 33a, 33b du fluide sont formés à travers l'écran thermique 32, au voisinage de ses extrémités axiales, et au niveau de rainures, telles que 37, usinées circonférentiellement à l'avant et à l'arrière de la partie intermédiaire pour distribuer le fluide dans les canaux 36, à une extrémité, et le collecter, à l'autre extrémité des canaux.

La partie intermédiaire 34 est solidaire d'une structure de maintien 38 sous forme de structure annulaire en matériau composite C/C. Elle est formée par enroulement d'une texture fibreuse en couches superposées sur un mandrin et liaison des couches entre elles par des fibres s'étendant transversalement par rapport aux couches, par exemple par aiguilletage, la préforme annulaire obtenue étant densifiée par une matrice carbone. Un mode de réalisation de préformes annulaires aiguilletées pour constituer des renforts de pièces structurales en matériau composite C/C est décrit dans le brevet US 4 790 052 déjà cité.

La structure de maintien 38 et la partie intermédiaire peuvent être réalisées en deux parties assemblées par brasage ou, comme dans l'exemple illustré. en une seule partie.

L'écran thermique 32 est brasé sur la face de la partie intermédiaire présentant les canaux 36 et rainures 37.

Le brasage est réalisé comme décrit ci-dessus en référence aux figures 1 et 2, éventuellement après formation de revêtement métallique d'accrochage de la brasure, au moins après formation d'un revêtement d'étanchéité sur les parois des canaux 36 et rainures 37.

La figure 4 illustre très schématiquement une structure de statoréacteur dont la paroi 40 constitue un échangeur de chaleur conforme à l'invention.

La paroi 40 a une structure analogue à celle du bloc 10 de la figure 1 et est fabriquée de façon semblable. L'écran thermique 42 situé du côté interne de la paroi est réalisé en matériau CMC, par exemple en C/SiC. Il est brasé sur une partie intermédiaire 44 dans une face de laquelle sont usinés des canaux 46, la face de la partie intermédiaire 44 présentant les canaux étant recouverte par l'écran thermique 42. Les canaux 46 sont parcourus par un fluide constituant un combustible injecté dans la chambre de combustion après avoir été réchauffé par passage dans la paroi 40.

La partie intermédiaire 44 est en matériau composite C/C et est brasée sur une structure de maintien 48 également en matériau composite C/C. La structure de maintien est avantageusement en forme de nid d'abeilles afin d'alléger au maximum l'ensemble.

Le brasage, la formation éventuelle d'un revêtement métallique d'accrochage sur les faces à braser, et la formation d'un revêtement d'étanchéité sur les parois des canaux de circulation de fluide sont réalisés comme décrit en référence aux figures 1 et 2.

Dans ce qui précède, on a envisagé la formation de canaux de circulation de fluide dans la face de la partie intermédiaire située du côté de l'écran thermique. Il s'agit là d'une disposition préférée. La formation des canaux dans la face de la partie intermédiaire située du côté de la structure de maintien n'est toutefois pas exclue.

## Revendications

1. Echangeur de chaleur en matériau composite, **caractérisé en ce qu'**il comprend une partie intermédiaire (14 ; 34 ; 44) en matériau composite réfractaire dans laquelle sont formés des canaux de circulation de fluide (16 ; 36 ; 46), la partie intermédiaire étant intercalée entre une partie en matériau composite réfractaire formant écran thermique (12 ; 32 ; 42) et une partie en matériau composite thermostructural formant structure de maintien de l'échangeur (18 ; 38 ; 48), les parties constitutives de l'échangeur de chaleur étant assemblées par brasage.

2. Echangeur de chaleur selon la revendication 1, **caractérisé en ce que** la partie intermédiaire (14 ; 34 ; 44) est en matériau composite C/C.

3. Echangeur de chaleur selon l'une quelconque des revendications 1 et 2, **caractérisé en ce que** la partie formant écran thermique (12 ; 32 ; 42) est en matériau composite à matrice céramique.

4. Echangeur de chaleur selon la revendication 3, **caractérisé en ce que** la partie formant écran thermique (12 ; 32 ; 42) est en matériau composite C/SiC.

5. Echangeur de chaleur selon l'une quelconque des revendications 1 à 4, **caractérisé en ce que** la partie formant structure de maintien (18 ; 38 : 48) est en matériau composite C/C.

6. Echangeur de chaleur selon l'une quelconque des revendications 1 à 5, **caractérisé en ce que** les canaux de circulation de fluide (16 ; 36 ; 46) sont formés dans une face de la partie intermédiaire (14 ; 34 ; 44) et sont délimités en partie par la paroi adjacente d'une des deux autres parties.

7. Echangeur de chaleur selon l'une quelconque des revendications 1 à 6, **caractérisé en ce que** les canaux de circulation de fluide (16 ; 36 ; 46) sont munis d'un revêtement étanche.

8. Echangeur de chaleur selon l'une quelconque des revendications 1 à 7, **caractérisé en ce que** la partie formant structure de maintien est en nid d'abeilles.

9. Echangeur de chaleur selon l'une quelconque des revendications 1 à 7, **caractérisé en ce que** la partie formant structure de maintien (18 ; 38 : 48) est en un matériau composite comprenant un renfort fibreux ayant plusieurs couches fibreuses superposées liées entre elles par des fibres s'étendant transversalement par rapport aux couches.

10. Elément (30 ; 40) de paroi de chambre de combustion de stato réacteur, **caractérisé en ce qu'**il incorpore un échangeur de chaleur selon l'une quelconque des revendications 1 à 8.

11. Procédé de fabrication d'un échangeur de chaleur en matériau composite, **caractérisé en ce qu'**il comprend
- la réalisation d'une partie intermédiaire en matériau composite réfractaire munie de canaux de circulation de fluide,
- la réalisation d'une partie d'écran thermique en matériau composite réfractaire,
- la réalisation d'une partie de structure en matériau composite thermostructural, et
- l'assemblage des différentes parties par brasage en interposant la partie intermédiaire entre la partie d'écran thermique et la partie de structure.

12. Procédé selon la revendication 11, **caractérisé en ce que** les canaux de circulation de fluide sont formés par usinage dans une face de la partie intermédiaire.

13. Procédé selon l'une quelconque des revendications 11 et 12, **caractérisé en ce que** l'on réalise la partie intermédiaire en matériau composite C/C.

14. Procédé selon l'une quelconque des revendications 11 à 13, **caractérisé en ce que** l'on forme un revêtement étanche sur les parois des canaux de circulation de fluide.

15. Procédé selon la revendication 14, **caractérisé en ce que** le revêtement étanche est formé par dépôt d'une couche métallique.

16. Procédé selon l'une quelconque des revendications 11 à 15, **caractérisé en ce que** l'on réalise la partie d'écran thermique en matériau composite à matrice céramique.

17. Procédé selon l'une quelconque des revendications 11 à 16, **caractérisé en ce que** l'on réalise la partie de structure en matériau composite C/C.

18. Procédé selon l'une quelconque des revendications 11 à 17, **caractérisé en ce que** l'on réalise la partie de structure en nid d'abeilles.

19. Procédé selon l'une quelconque des revendications 11 à 17, **caractérisé en ce que** l'on réalise la partie de structure en un matériau composite ayant un renfort fibreux densifié par une matrice, et **en ce que** le renfort fibreux est réalisé par superposition et aiguilletage de plusieurs couches fibreuses.

20. Procédé selon l'une quelconque des revendications 11 à 19, **caractérisé en ce que** l'on forme une couche métallique d'accrochage de brasure sur les faces en regard des parties à assembler par brasage.

21. Procédé selon la revendication 20, **caractérisé en ce que** les canaux de circulation de fluide sont formés par usinage dans une face de la partie intermédiaire qui est recouverte par une face adjacente d'une autre partie, et la couche métallique est formée sur la face de la partie intermédiaire, après usinage des canaux, et sur la face adjacente, de sorte que la couche métallique constitue également un revêtement étanche des parois des canaux de circulation de fluide.

## Patentansprüche

1. Wärmetauscher aus Verbundmaterial, aufweisend ein zwischenliegendes Teil (14; 34; 44) aus wärmebeständigem Verbundmaterial, in welchem Fluidzirkulationskanäle (16; 36; 46) gebildet sind, wobei das zwischenliegende Teil zwischen einem Teil aus wärmebeständigem Verbundmaterial, welches einen Hitzeschild bildet (12; 32; 42), und einem Teil aus thermostrukturalem Verbundmaterial angeordnet ist, welches eine tragende Struktur des Wärmetauschers (18; 38; 48) bildet, wobei die Teile, welche den Wärmetauscher bilden, durch Hartlöten zusammengefügt sind.

2. Wärmetauscher nach Anspruch 1, **dadurch gekennzeichnet, dass** das zwischenliegende Teil (14; 34; 44) aus C/C-Verbundmaterial ist.

3. Wärmetauscher nach einem der Ansprüche 1 oder 2, **dadurch gekennzeichnet, dass** das Teil, welches einen Hitzeschild bildet (12; 32; 42), aus Verbundmaterial mit Keramikmatrix ist.

4. Wärmetauscher nach Anspruch 3, **dadurch gekennzeichnet, dass** das Teil (12; 32; 42), welches den Hitzeschild bildet, aus C/SiC-Verbundmaterial ist.

5. Wärmetauscher nach einem der Ansprüche 1 bis 4, **dadurch gekennzeichnet, dass** das Teil, welches die tragende Struktur (18; 38; 48) bildet, aus C/C-Verbundmaterial ist.

6. Wärmetauscher nach einem der Ansprüche 1 bis 5, **dadurch gekennzeichnet, dass** die Fluidzirkulationskanäle (16; 36; 46) in einer Oberfläche des zwischenliegenden Teils (14; 34; 44) gebildet sind und teilweise durch die benachbarte Wand eines der beiden anderen Teil begrenzt sind.

7. Wärmetauscher nach einem der Ansprüche 1 bis 6, **dadurch gekennzeichnet, dass** die Fluidzirkulationskanäle (16; 36; 46) mit einer Dichtigkeitsschicht ausgestattet sind.

8. Wärmetauscher nach einem der Ansprüche 1 bis 7, **dadurch gekennzeichnet, dass** das Teil, welches die tragende Struktur bildet, eine wabenförmige Struktur hat.

9. Wärmetauscher nach einem der Ansprüche 1 bis 7, **dadurch gekennzeichnet, dass** das Teil, welches die tragende Struktur (18; 38; 48) bildet, aus einem Verbundmaterial ist, welches eine Faserverstärkung mit einer Mehrzahl von übereinander gelagerten Faserschichten aufweist, die untereinander durch relativ zu den Schichten quer verlaufenden Fasern verbunden sind.

10. Brennkammer-Wandelement (30; 40) eines Staustrahltriebwerks, **dadurch gekennzeichnet, dass** es einen Wärmetauscher gemäß einem der Ansprüche 1 bis 8 inkorporiert.

11. Verfahren zur Herstellung eines Wärmetauschers aus Verbundmaterial, aufweisend:
- Realisieren eines zwischenliegenden Teils aus wärmebeständigem Verbundmaterial, welches mit Fluidzirkulationskanälen versehen ist,
- Realisieren eines Hitzeschild-Teils aus wärmebeständigem Verbundmaterial,
- Realisieren eines tragenden Teils aus thermostrukturalem Verbundmaterial,
- Zusammenfügen der unterschiedlichen Teile mittels Hartlöten, wobei das zwischenliegende Teil zwischen dem Hitzeschild-Teil und dem tragenden Teil zwischengeordnet wird.

12. Verfahren nach Anspruch 11, **dadurch gekennzeichnet, dass** die Fluidzirkulationskanäle durch Einarbeiten in eine Oberfläche des zwischenliegenden Teils gebildet werden.

13. Verfahren nach einem der Ansprüche 11 oder 12, **dadurch gekennzeichnet, dass** das zwischenliegende Teil aus C/C-Verbundmaterial gebildet wird.

14. Verfahren nach einem der Ansprüche 11 bis 13, **dadurch gekennzeichnet, dass** eine Dichtigkeitsbeschichtung auf den Wänden der Fluidzirkulationskanäle realisiert wird.

15. Verfahren nach Anspruch 14, **dadurch gekennzeichnet, dass** die Dichtigkeitsbeschichtung durch Aufbringen einer metallischen Schicht realisiert wird.

16. Verfahren nach einem der Ansprüche 11 bis 15, **dadurch gekennzeichnet, dass** das Hitzeschild-Teil aus Verbundmaterial mit Keramikmatrix ist.

17. Verfahren nach einem der Ansprüche 11 bis 16, **dadurch gekennzeichnet, dass** das tragende Teil aus C/C-Verbundmaterial realisiert wird.

18. Verfahren nach einem der Ansprüche 11 bis 17, **dadurch gekennzeichnet, dass** das tragende Teil wabenförmig realisiert wird.

19. Verfahren nach einem der Ansprüche 11 bis 17, **dadurch gekennzeichnet, dass** das tragende Teil aus Verbundmaterial mit einer durch eine Matrix verdichteten Faserverstärkung realisiert wird, und dass die Faserverstärkung durch Übereinanderlagern und Vernadeln von mehreren Faserschichten realisiert wird.

20. Verfahren nach einem der Ansprüche 11 bis 19, **dadurch gekennzeichnet, dass** eine metallische Hartlot-Adhäsionsschicht auf den zusammenzufügenden Oberflächen gebildet wird.

21. Verfahren nach Anspruch 20, **dadurch gekennzeichnet, dass** die Fluidzirkulationskanäle durch Einarbeiten in eine Oberfläche des zwischenliegenden Teils gebildet werden, die durch eine gegenüber liegende Oberfläche eines anderen Teils abgedeckt wird, und die metallische Schicht auf der Oberfläche des zwischenliegenden Teils nach Einarbeiten der Kanäle und auf der gegenüber liegenden Oberfläche gebildet wird, so dass die metallische Schicht auch eine Dichtigkeitsbeschichtung der Wände der Fluidzirkulationskanäle bildet.

## Claims

1. A heat exchanger of composite material, **characterised in that** it comprises an intermediate portion (14; 34; 44) of refractory composite material in which fluid circulation channels (16; 36; 46) are formed, the intermediate portion being interposed between a portion of refractory composite material forming a heat shield (12; 32; 42) and a portion of thermostructural composite material forming a support structure of the exchanger (18; 38; 48), the portions constituting the heat exchanger being assembled together by brazing.

2. A heat exchanger according to claim 1, **characterised in that** the intermediate portion (14; 34; 44) is of C/C composite material.

3. A heat exchanger according to claim 1 or 2, **characterised in that** the portion forming a heat shield (12; 32; 42) is of ceramic matrix composite material.

4. A heat exchanger according to claim 3, **characterised in that** the portion forming a heat shield (12; 32; 42) is of C/SiC composite material.

5. A heat exchanger according to any one of claims 1 to 4, **characterised in that** the portion forming a support structure (18; 38; 48) is of C/C composite material.

6. A heat exchanger according to any one of claims 1 to 5, **characterised in that** the fluid circulation channels (16; 36; 46) are formed in one face of the intermediate portion (14; 34; 44) and are defined in part by the adjacent wall of one of the other two portions.

7. A heat exchanger according to any one of claims 1 to 6, **characterised in that** the fluid circulation channels (16; 36; 46) are provided with a leakproof coating.

8. A heat exchanger according to any one of claims 1 to 7, **characterised in that** the portion forming a support structure is of honeycomb structure.

9. A heat exchanger according to any one of claims 1 to 7, **characterised in that** the portion forming a support structure (18; 38; 48) is of a composite material comprising fiber reinforcement having a plurality of superposed fiber layers bonded together by fibers extending transversely relative to the layers.

10. A combustion chamber wall element (30; 40) for a ram jet, **characterised in that** it incorporates a heat exchanger in accordance with any one of claims 1 to 8.

11. A method of manufacturing a heat exchanger of composite material, the method being **characterised in that** it comprises:
- making an intermediate portion of refractory composite material provided with fluid circulation channels;
- making a heat shield portion of refractory composite material;
- making a structural portion out of thermostructural composite material; and
- assembling the various portions together by brazing with the intermediate portion being interposed between the heat shield portion and the structural portion.

12. A method according to claim 11, **characterised in that** the fluid circulation channels are formed by machining in a face of the intermediate portion.

13. A method according to claim 11 or 12, **characterised in that** the intermediate portion is made of C/C composite material.

14. A method according to claim 11 or 13, **characterised in that** a leakproof coating is formed on the walls of the fluid circulation channels.

15. A method according to claim 14, **characterised in that** the leakproof coating is formed by depositing a layer of metal.

16. A method according to any one of claims 11 to 15, **characterised in that** the heat shield portion is made of ceramic matrix composite material.

17. A method according to any one of claims 11 to 16, **characterised in that** the structural portion is made of C/C composite material.

18. A method according to any one of claims 11 to 17, **characterised in that** a honeycomb structure portion is made.

19. A method according to any one of claims 11 to 17, **characterised in that** the structural portion is made of a composite material having fiber reinforcement densified by a matrix, and **in that** the fiber reinforcement is made by superposing a plurality of fiber layers and needling them together.

20. A method according to any one of claims 11 to 19, **characterised in that** a brazing alloy adhesion layer of metal is formed on the facing faces of the portions that are to be assembled together by brazing.

21. A method according to claim 20, **characterised in that** the fluid circulation channels are formed by machining in a face of the intermediate portion which is covered by an adjacent face of another portion, and the metal layer is formed on the face of the intermediate portion, after the channels have been machined, and on the adjacent face, in such a manner that the metal layer also constitutes a coating for leakproofing the walls of the fluid circulation channels.
